# EUROPÄISCHE PATENTSCHRIFT

(11) **EP 3 118 469 B1**
(45) Veröffentlichungstag und Bekanntmachung des Hinweises auf die Patenterteilung: **28.03.2018**
(21) Anmeldenummer: 16173207.8
(22) Anmeldetag: 07.06.2016
(51) Int. Cl.: F16B 13/00

(54) **SELBSTSCHNEIDENDER HINTERSCHNITTANKER**
SELF-CUTTING UNDERCUT ANCHOR
ANCRE CONTRE-DEPOUILLEE AUTO-TARAUDEUSE

(30) Priorität: 15.07.2015 DE 102015111472; 24.02.2016 DE 102016103194; 02.06.2016 DE 102016110162
(43) Veröffentlichungstag der Anmeldung: 18.01.2017
(73) Patentinhaber: fischerwerke GmbH & Co. KG, 72178 Waldachtal (DE)
(72) Erfinder: Linka, Martin, 72160 Horb a.N. (DE); Lehmann, David, 72275 Alpirsbach (DE)
(74) Vertreter: Lehmann, David

(56) Entgegenhaltungen:
- EP-A1- 0 225 845
- EP-B1- 0 308 619

## Beschreibung

Die Erfindung betrifft einen selbstschneidenden Hinterschnittanker mit den Merkmalen des Oberbegriffs des Anspruchs 1.

Hinterschnittanker, mit denen Bauteile an einem Verankerungsgrund befestigt werden können, sind seit langem bekannt. Sie werden beispielsweise verwendet, um eine Stahlkonsole an einer Betonwand oder einer Decke zu befestigen. Hierzu wird ein Hinterschnittanker in ein Bohrloch eingebracht, das im Verankerungsgrund erstellt wurde. Das Bohrloch kann schon vor dem Einbringen des Hinterschnittankers einen Hinterschnitt aufweisen, wie dies beispielsweise aus der Offenlegungsschrift DE 36 34 431 A1 bekannt ist. Mit "Hinterschnitt" ist ein gegenüber den übrigen Bereichen des im Regelfall zylindrischen Bohrlochs im Durchmesser erweiterter Bereich gemeint, der in der Bohrlochwand, meist in der Nähe des Bohrlochgrunds, ausgebildet ist und in den der Hinterschnittanker nach dem Verspreizen formschlüssig eingreift. Nachteilig an dem aus der Offenlegungsschrift DE 36 34 431 A1 bekannten Hinterschnittanker ist, dass zur Erzeugung des Hinterschnitts ein spezielles Bohrwerkzeug verwendet werden muss.

Selbstschneidende Hinterschnittanker sind dagegen Spreizanker, die derart gestaltet sind, dass sie beim Verspreizen den Hinterschnitt selbst erzeugen. Ein gattungsgemäßer Spreizanker ist aus dem Europäischen Patent EP 0 308 619 B1 bekannt. Der selbstschneidende Hinterschnittanker weist einen Ankerbolzen mit einem konischen Spreizkörper und eine Spreizhülse auf, die einbringseitig vorn geschlitzt ist. Durch die Schlitzung sind Spreizelemente ausgebildet, die an ihren Außenseiten Schneidzähne aufweisen, die nach dem Aufspreizen der Spreizhülse in den Verankerungsgrund einschneiden. Die Spreizhülse weist im Bereich der Schneidzähne einen Durchmesser auf, der dem Durchmesser des ungeschlitzten Teils der Spreizhülse entspricht. Am vorderen Ende der Spreizelemente ist jeweils ein Schneidzahn ausgebildet, dessen vordere Flanke im unverspreizten Zustand orthogonal zur Längsachse des Spreizankers verläuft. Zum Verankern wird der Spreizanker in ein nicht-hinterschnittenes zylindrisches Bohrloch eingebracht, bis der Ankerbolzen am Bohrlochgrund aufsteht. Dann wird die Spreizhülse mit einem Setzwerkzeug auf den Konus aufgetrieben, wodurch die an den vorderen Enden der Spreizelemente ausgebildeten Schneidzähne flächig in die Bohrlochwand eingreifen und Teile der Bohrlochwand abtragen, so dass ein Hinterschnitt entsteht, der sich in Einbringrichtung des Hinterschnittankers in das Bohrloch im Durchmesser erweitert. Nach dem Verspreizen greifen die Spreizelemente in diesen Hinterschnitt ein, wodurch der Hinterschnittanker im Verankerungsgrund formschlüssig verankert ist. Nachteilig an dem bekannten Hinterschnittanker ist, dass zum Aufspreizen der Spreizhülse eine große Schlagenergie notwendig ist.

Aufgabe der Erfindung ist, einen selbstschneidenden Hinterschnittanker vorzuschlagen, der ein verbessertes Aufspreizverhalten zeigt.

Diese Aufgabe wird erfindungsgemäß durch einen selbstschneidenden Hinterschnittanker mit den Merkmalen des Anspruchs 1 gelöst. "Selbstschneidend" meint hier, dass der Hinterschnittanker einen sich in Einbringrichtung des Hinterschnittankers in ein zuvor hergestelltes Bohrloch erweiternden Hinterschnitt im Bohrloch selbst erzeugt und diesen in die Wand des Bohrlochs selbst schneidet. Im Gegensatz hierzu sind Bolzen- oder Hülsenanker zu sehen, bei denen ein Spreizelement in eine Spreizhülse eingezogen wird, so dass die Spreizhülse radial verspreizt und gegen die Wand des Bohrlochs gedrückt wird, im Wesentlichen jedoch ohne dass es zu einer Relativbewegung in Längsrichtung zum Bohrloch kommt. Je nach Nachgiebigkeit des Verankerungsgrunds kann es hierbei zwar auch zu einer Verformung der Bohrlochwandung kommen, doch stellt dies kein Scheiden im Sinne der Erfindung dar. Der erfindungsgemäße selbstschneidende Hinterschnittanker weist einen Ankerbolzen und eine Spreizhülse auf und ist durch Verspreizen der Spreizhülse in einem Bohrloch verankerbar, wobei ein Hinterschnitt erzeugt wird. Der Hinterschnittanker erstreckt sich in Längsrichtung entlang einer Längsachse, die insbesondere parallel zur Einbringrichtung des Hinterschnittankers in ein Bohrloch verläuft oder mit der Einbringrichtung identisch ist. Der Ankerbolzen weist zumindest an seinem in Einbringrichtung hinteren Teil ein Lastangriffsmittel auf, insbesondere in Form eines Außengewindes, auf das eine Mutter aufgeschraubt werden kann. In diesem Bereich ist der Ankerbolzen insbesondere zylindrisch gestaltet. Der Ankerbolzen weist einbringseitig einen Spreizkörper auf, der sich zumindest abschnittsweise in Einbringrichtung im Durchmesser erweitert, insbesondere konisch erweitert. Mit "Durchmesser" ist der Durchmesser eines Umkreises um den betreffenden Querschnitt gemeint, der in einer Ebene liegt, zur der die Längsachse eine Flächennormale bildet. Insbesondere schneidet die Längsachse die Ebene im Mittelpunkt des Umkreises. "Konisch" meint hier, dass der Spreizkörper insbesondere die Form eines Kegelstumpfs oder eine gewölbte Spreizfläche aufweisen kann.

Die Spreizhülse ist rohrförmig, insbesondere hohlzylindrisch ausgebildet. Die rohrförmige Spreizhülse kann im Umfang geschlossen oder über ihre Länge ganz oder teilweise geschlitzt sein. Sie kann beispielsweise aus einem geschlossenen Rohr aus Metall oder aus einem Blech durch Umformen hergestellt werden, wobei die Spreizhülse im letzteren Fall einen Schlitz aufweist, der sich über ihre gesamte Länge erstreckt, sofern er nicht durch Schweißen o.ä. geschlossen wird. Die Spreizhülse ist insbesondere einteilig, kann aber auch mehrteilig ausgebildet sein und ist am Ankerbolzen in Längsrichtung beweglich angeordnet, insbesondere derart, dass die Spreizhülse den Ankerbolzen in Umfangsrichtung umfasst. Mit "in Längsrichtung beweglich" ist hier gemeint, dass die Spreizhülse zumindest mittels eines Setzwerkzeugs in Längsrichtung, entlang der Längsachse zum Spreizkörper hin, bewegbar ist. Dies schließt nicht aus, dass die Spreizhülse mittels eines Verliersicherungselements auf dem Ankerbolzen gehalten ist, so dass sich die Spreizhülse beim Transport nicht vom Ankerbolzen lösen kann. Das Verliersicherungselement ist beispielsweise eine Einprägung in der Mantelfläche der Spreizhülse, die in das als Gewinde ausgebildete Lastangriffsmittel eingreift. Die Spreizhülse weist einbringseitig einen geschlitzten Spreizabschnitt mit Spreizelementen auf, die durch Schlitze voneinander getrennt sind. Grundsätzlich kann die Spreizhülse im Wesentlichen über ihre ganze Länge geschlitzt sein. An ihrem in Einbringrichtung hinteren Teil weist die Spreizhülse jedoch insbesondere keinen Schlitz auf, ist dort also ungeschlitzt. Die Spreizelemente sind mittels des Spreizkörpers radial voneinander weg aufspreizbar, wenn der Spreizabschnitt der Spreizhülse auf den Spreizkörper aufgeschoben wird. Die Schlitze können in Längsrichtung verlaufen oder zur Längsachse geneigt sein. Die Spreizelemente sind insbesondere kragarmförmig und in Umfangsrichtung gewölbt ausgebildet. An den Spreizelementen kann eine Materialschwächung vorgesehen sein, die das Aufspreizen, also das Biegen der Spreizelemente radial nach außen weg von der Längsachse, erleichtert. Diese Schwächung kann beispielsweise eine in Umfangsrichtung verlaufende Nut, eine Durchbrechung der Wand der Spreizhülse oder eine lokale Erweiterung eines oder mehrerer Schlitze sein, wobei die Schwächung beispielsweise im Bereich des in Einbringrichtung hinteren Endes der Schlitze angeordnet ist. An den Spreizelementen können auch mehrere Schwächungen ausgebildet sein, die in Längsrichtung hintereinander und voneinander beabstandet sind. Der Hinterschnittanker ist derart gestaltet, dass zum Verspreizen ein Setzwerkzeug an das hintere Ende der Spreizhülse aufgesetzt und dass die Spreizhülse durch Schläge auf ihr hinteres Ende auf den Spreizkörper aufgeschoben werden kann, wobei die Spreizhülse in Längsrichtung relativ zur Bohrlochwand bewegt wird. Die Schläge können insbesondere unmittelbar vom Setzwerkzeug auf die Spreizhülse übertragen werden. Hierzu kann das Setzwerkzeug ebenfalls rohrförmig ausgebildet sein. Dabei ist insbesondere keine Mutter oder kein entsprechendes Befestigungsmittel am Lastangriffsmittel angeordnet. Zum Verspreizen ist der Spreizkörper insbesondere im Bohrloch ortsfest gehalten, insbesondere indem der Ankerbolzen mit seinem vorderen Ende am Bohrlochgrund ansteht.

Erfindungsgemäß weist die Spreizhülse an ihrem in Einbringrichtung vorderen Ende einen im Durchmesser reduzierten Gleitabschnitt mit mindestens einem Gleitelement auf. Der Gleitabschnitt ist gegenüber einem in Einbringrichtung hinteren Teil der Spreizhülse und/oder gegenüber dem in Einbringrichtung hinter dem Gleitabschnitt angeordneten Teil des Spreizabschnitts im Durchmesser reduziert, er weist im unverspreizten Zustand einen kleineren Durchmesser als der hintere Teil des Spreizabschnitts auf. Mit "Durchmesser" ist hier der Durchmesser eines die Spreizhülse umschreibenden Kreises gemeint, also ein Außendurchmesser. Insbesondere bildet der Gleitabschnitt im unverspreizten Zustand den Teil des Spreizabschnitts mit der geringsten radialen Materialdicke. Zudem ist zwischen dem Gleitabschnitt und dem in Einbringrichtung hinteren Teil der Spreizhülse mindestens eine erste Ringstufe angeordnet, die eine erste Kante zum Eingriff in eine Bohrlochwand des Bohrlochs bildet und insbesondere direkt an den Gleitabschnitt angrenzt. Dies bedeutet, dass mindestens eines der Spreizelemente an seinem vorderen Ende in seiner Dicke reduziert ist, insbesondere flächig, und somit in diesem Bereich ein Gleitelement des Gleitabschnitts bildet. Das Gleitelement kann eben oder gebogen sein. Insbesondere ist es in Längsrichtung flächig eben und in Umfangsrichtung kreisringförmig gewölbt. Insbesondere weisen alle Spreizelemente derartige Gleitelemente auf, die gemeinsam den Gleitabschnitt bilden. Beim Verspreizen dient der Gleitabschnitt im Wesentlichen nicht zur Erzeugung des Hinterschnitts, sondern er bewirkt, dass die Spreizhülse auf dem Spreizkörper gleitet. Durch die Reduktion der Materialdicke sind die Gleitelemente des Gleitabschnitts leicht verformbar, so dass sie sich der Form des Spreizkörpers anpassen können und insbesondere flächig am Spreizkörper anliegen. Der Gleitabschnitt kann beim Verspreizen zwar mit der Bohrlochwand in Berührung kommen, die Erstellung des Hinterschnitts erfolgt aber primär mittels der mindestens einen Ringstufe, die in Einbringrichtung hinter dem Gleitabschnitt angeordnet ist. Die Kante der Ringstufe wirkt beim Verspreizen wie ein Meisel, der in die Einbringrichtung bewegt und nach außen gegen die Bohrlochwand gepresst wird. Die als Meisel wirkende Kante der Ringstufe ist im Durchmesser gegenüber dem einbringseitig vor der Ringstufe liegenden Bereich, insbesondere gegenüber dem Gleitabschnitt, vergrößert, wobei die Durchmesservergrößerung insbesondere unstetig und insbesondere mit einem steilen Flankenwinkel erfolgt. Der Flankenwinkel schließt im unverspreizten Zustand mit der Längsachse insbesondere einen Winkel von mehr als 70°, insbesondere von mehr als 80° ein. Dabei wird der Flankenwinkel zwischen dem höchsten und dem tiefsten Punkt der Flanke gemessen, die die beiden Punkte insbesondere linear verbindet, aber auch gekrümmt sein kann. Insbesondere verläuft die einbringseitige Flanke der Ringstufe im unverspreizten Zustand orthogonal zur Längsachse, also mit einem Flankenwinkel von 90°, und bildet eine Radialfläche. Die Ringstufe erstreckt sich insbesondere über den gesamten Umfang des Hinterschnittankers, kann aber auch nur lokal ausgebildet oder unterbrochen sein. Der Gleitabschnitt und die Ringstufe können spanend geformt werden. Vorteilhaft ist allerdings das Anformen des Gleitabschnitts und der Ringstufe durch eine Kaltmassivumformung des Metalls, da die Ringstufe hierdurch verfestigt werden kann, was für ihre Funktion als Meisel von Vorteil ist.

Zum Verankern des Hinterschnittankers in einem in einem Verankerungsgrund hergestellten Bohrloch wird der Hinterschnittanker in Einbringrichtung in das Bohrloch eingebracht, üblicherweise bis der Ankerbolzen am Bohrlochgrund ansteht und sich am Bohrlochgrund abstützt. Im Regelfall steht in diesem unverspreizten Zustand das hintere Ende der Spreizhülse über den Bohrlochmund über. Zum Verspreizen wird ein Setzwerkzeug an das in Einbringrichtung hintere Ende der Spreizhülse aufgesetzt und die Spreizhülse durch Schläge in das Bohrloch eingetrieben, so dass zumindest ein Teil des Spreizabschnitts der Spreizhülse auf den Spreizkörper aufgeschoben wird. Dabei wird die erste Kante als Teil der Spreizhülse entlang der Längsachse in Einbringrichtung bewegt und durch das Aufschieben auf den Spreizkörper radial nach außen, von der Längsachse weg, bewegt. Die als Meisel wirkende Kante wird dabei gegen die Bohrlochwand gepresst und dieser entlang in Einbringrichtung bewegt, so dass die Kante Material der Bohrlochwand abträgt und den Hinterschnitt erzeugt. Dabei liegt das in Einbringrichtung vor der Kante angeordnete Gleitelement am Spreizkörper an. Das durch die Kante abgetragene Material sammelt sich im Bereich vor der Ringstufe. Aufgrund der reduzierten Dicke des einbringseitig vor der Ringstufe angeordneten Gleitelements ist dieses leicht verformbar, derart, dass das Gleitelement beim Aufschieben am Spreizkörper insbesondere flächig anliegt und zwischen dem Gleitelement und der Bohrlochwand zumindest zu Beginn des Aufspreizens ein Ringspalt besteht, wenn die Kante an der Bohrlochwand anliegt. In den Ringspalt wird das von der Kante abgetragene Material der Bohrlochwand aufgenommen. Dabei verhindert das am Spreizkörper anliegende Gleitelement, dass das abgetragene Material zwischen die Spreizhülse und den Spreizkörper gelangt, was die Reibung erhöhen und ein Aufschieben der Spreizhülse auf den Spreizkörper erschweren würde. Aufgrund der erfindungsgemäßen Ausgestaltung des Hinterschnittankers wird zum Verspreizen eine geringe Schlagenergie benötigt, so dass das Aufspreizverhalten des Hinterschnittankers verbessert ist.

Nach dem beschriebenen Aufschieben der Spreizhülse auf den Spreizkörper kann dieser durch Zug am Lastangriffsmittel weiter in die Spreizhülse eingezogen werden.

Vorzugsweise weist das Gleitelement des Gleitabschnitts des erfindungsgemäßen Hinterschnittankers eine axiale Länge auf, die größer als seine radiale Dicke ist. Insbesondere weist das Gleitelement eine Länge auf, die mindestens doppelt so groß wie seine radiale Dicke ist. Ist die radiale Dicke des Gleitelements nicht konstant, sondern variiert nicht nur lokal sondern über einen größeren Bereich, beispielsweise weil ein Teil des Gleitelements zur Längsachse geneigt ist, so ist in diesem Fall die geringste Dicke des Gleitelements gemeint. Dabei ist die radiale Dicke des Gleitelements insbesondere kleiner als die Hälfte, insbesondere kleiner als 40 % der maximalen Dicke, welche die Spreizhülse in ihrem ungeschlitzten, hinteren Teil aufweist. Mit "Dicke" ist hier insbesondere die Materialdicke des Gleitelements und/oder der Spreizhülse gemeint. Ein derart gestaltetes Gleitelement ist relativ dünn und damit leicht verformbar, so dass es sich an die Geometrie des Spreizkörpers leicht anpassen und flächig anliegen kann. Zudem ist das Gleitelement lang genug, um zu verhindern, dass abgetragenes Material zwischen den Spreizkörper und die Spreizhülse gelangt.

Weiterhin ist bevorzugt, dass das Gleitelement eine axiale Länge aufweist, die kleiner als 10 %, insbesondere kleiner als 7 % und insbesondere kleiner als 5 % der axialen Länge der Spreizhülse ist. Ein Gleitelement dieser Länge zeigt eine gute Wirkung bei geringem Bauraum und Materialverbrauch. Insbesondere ist die axiale Länge des Gleitelements zudem kleiner als 25 %, insbesondere kleiner als 20 % und insbesondere kleiner als 15 % der axialen Länge der Schlitze der Spreizhülse.

Bei einer bevorzugten Ausgestaltungsform des erfindungsgemäßen Hinterschnittankers ist die radiale Dicke des Gleitelements nicht größer, insbesondere kleiner, als die radiale Höhe der ersten Ringstufe. Mit "radialer Höhe" der ersten Ringstufe ist der größte radiale Abstand zwischen der ersten Kante der Ringstufe und dem in Einbringrichtung vor der Ringstufe angeordneten Gleitelement gemeint. Die Dicke des Gleitelements ist somit relativ gering und das Gleitelement ist gut verformbar, während die erste Ringstufe stabil ausgebildet ist, was den Einschnitt in die Bohrlochwand erleichtert.

Weiterhin ist bevorzugt, dass der Gleitabschnitt eine Außenfläche aufweist, die in Einbringrichtung radial nach außen geneigt ist. Das bedeutet, dass der Durchmesser des Gleitabschnitts in Einbringrichtung zunimmt. Eine in Einbringrichtung radial nach außen geneigte Außenfläche hat den Vorteil, dass abgetragenes Material im Aufnahmeraum gehalten wird. Insbesondere nimmt die radiale Dicke des Gleitelements in diesem Fall in Einbringrichtung zu. Sie kann aber auch in Einbringrichtung konstant sein, beispielsweise wenn das Gleitelement als Ganzes radial nach außen gebogen ist, so dass die der Längsachse abgewandte Außenfläche, wie auch die der Längsachse zugewandte Innenfläche des Gleitelements nach außen geneigt ist. Diese Ausgestaltung hat den Vorteil, dass das Gleitelement dünnwandig und somit gut verformbar ist, was ein Aufschieben der Spreizhülse auf den Spreizkörper erleichtert.

Vorzugsweise sind zwischen dem Gleitabschnitt und dem hinteren, insbesondere ungeschlitzten Teil der Spreizhülse des erfindungsgemäßen Hinterschnittankers mindestens zwei Ringstufen angeordnet, die Kanten zum Eingriff in eine Bohrlochwand bilden und sich im Außendurchmesser unterscheiden. Durch die Ausbildung mehrerer Ringstufen mit unterschiedlichen Durchmessern kann die Herstellung des Hinterschnitts erleichtert und verbessert werden. Insbesondere sind die Ringstufen in Längsrichtung hintereinander angeordnet, derart, dass die Ringstufe mit dem größeren Durchmesser in Einbringrichtung hinter der Ringstufe mit dem kleineren Durchmesser liegt. Insbesondere weisen alle Spreizelemente derartige Ringstufen auf.

Bei einer bevorzugten Ausgestaltungsform des erfindungsgemäßen Hinterschnittankers weist die erste Ringstufe, die sich entgegen der Einbringrichtung an den Gleitabschnitt anschließt, einen Durchmesser auf, der kleiner als der Durchmesser des hinteren, insbesondere ungeschlitzten Teils der Spreizhülse ist. Das bedeutet, dass die Spreizhülse im Bereich der ersten Ringstufe gegenüber ihrem hinteren Teil im Durchmesser reduziert ist. Ein derart ausgestalteter Hinterschnittanker lässt sich gut in ein Bohrloch einführen und verspreizen. Die zweite Ringstufe kann dagegen vorzugsweise einen Durchmesser aufweisen, der dem Durchmesser des hinteren, ungeschlitzten Teils der Spreizhülse entspricht. Somit nimmt der Durchmesser der Spreizhülse von ihrem einbringseitig vorderen Ende mit dem Gleitabschnitt über die erste Ringstufe bis zur zweiten Ringstufe nach hinten hin zu. Sind mehr als zwei Ringstufen ausgebildet, so können diese so ausgebildet sein, dass immer die in Einbringrichtung folgende Ringstufe einen größeren Durchmesser aufweist, als die in Einbringrichtung vor ihr angeordnete Ringstufe.

Die erste Ringstufe, die insbesondere entgegen der Einbringrichtung direkt an den Gleitabschnitt angrenzt, weist vorzugsweise eine größere radiale Höhe auf als die zweite Ringstufe, die zwischen der ersten Ringstufe und dem hinteren, insbesondere ungeschlitzten Teil der Spreizhülse angeordnet ist. Insbesondere weist die erste, in Einbringrichtung vordere Ringstufe die größte radiale Höhe aller Ringstufen auf, auch wenn mehr als zwei Ringstufen ausgebildet sind.

Weiterhin ist bevorzugt, dass der Abstand zwischen einer ersten und einer zweiten Ringstufe geringer als die axiale Länge des Gleitabschnitts ist. Vorzugsweise ist der Abstand zwischen den beiden Ringstufen zudem oder alternativ gleich oder größer, insbesondere um mindestens das 1,5-fache größer, als die radiale Höhe der ersten Ringstufe, wodurch die erste Ringstufe massiv und stabil genug ausgebildet ist und als Meisel wirken kann. Dabei ist der Zwischenbereich zwischen den beiden Ringstufen vorzugsweise entgegen der Einbringrichtung geneigt, mit nach hinten abnehmendem Durchmesser, wobei der Zwischenbereich insbesondere konisch ausgebildet ist. Diese Ausgestaltungsformen haben sich als vorteilhaft für die Erstellung des Hinterschnitts erwiesen.

Bei einer weiteren bevorzugten Ausgestaltungsform des erfindungsgemäßen Hinterschnittankers ist in Einbringrichtung hinter der ersten und/oder der zweiten Ringstufe ein Rauheitselement im geschlitzten Spreizabschnitt mit axialem Abstand zu der benachbarten Ringstufe angeordnet. Sind mehr als zwei Ringstufen vorhanden, so ist das Rauheitselement mit axialem Abstand zu der in Einbringrichtung hintersten Ringstufe angeordnet. "Benachbart" meint hier die Ringstufe, die in axialer Richtung den geringsten Abstand zum Rauheitselement aufweist. Als Rauheitselement können Profilierungen wie Nuten, Zähne oder Rändelungen angeordnet sein, die nach dem Aufspreizen die Reibung zwischen der Bohrlochwand und der Spreizhülse erhöhen und somit zu einem verbesserten Halt des Hinterschnittankers im Bohrloch beitragen. Insbesondere entspricht der Durchmesser des ungeschlitzten, hinteren Teils der Spreizhülse im Wesentlichen den Durchmesser der Spreizhülse im Bereich des Rauheitselements, so dass ein Einbringen des Hinterschnittankers in das Bohrloch durch das Rauheitselement nicht oder nicht wesentlich behindert wird. Insbesondere weist das Rauheitselement keilartige Zähne auf, die entgegen der Einbringrichtung nach außen ansteigen und an ihrem in Einbringrichtung hinteren Ende steil, also mit einem großen Flankenwinkel, insbesondere radial zur Längsachse hin abfallen. Derartig gestaltete Zähne behindern das Einbringen des Hinterschnittankers in das Bohrloch nicht, können aber beim Aufspreizen wirksam in die Bohrlochwand eindringen und den Halt des Hinterschnittankers im Bohrloch erhöhen.

Vorzugsweise ist der axiale Abstand zwischen dem Rauheitselement und der benachbarten Ringstufe größer, insbesondere um mindestens das 1,5-fache größer, als die radiale Höhe der benachbarten Ringstufe, wodurch die benachbarte Ringstufe massiv und stabil genug ausgebildet ist und als Meisel wirken kann.

Eine zwischen dem Rauheitselement und der benachbarten Ringstufe angeordnete Abstandsfläche ist vorzugsweise in Einbringrichtung radial nach außen geneigt, so dass sie das Rauheitselement in seiner Wirkung nicht behindert.

Die Erfindung wird nachfolgend anhand von vier in der Zeichnung dargestellten Ausführungsbeispielen näher erläutert.

Es zeigen:
- Figur 1: einen ersten erfindungsgemäßen Hinterschnittanker in einer Seitenansicht;
- Figur 2: den Hinterschnittanker der Figur 1 in einem Axialschnitt;
- Figur 3a: eine Detaildarstellung eines vorderen Bereichs eines Spreizelements des Hinterschnittankers gemäß Detail III in Figur 2;
- Figuren 3b bis 3f: weitere Ausführungsbeispiele des in Figur 3a dargestellten Details;
- Figur 4: eine Schnittdarstellung eines in ein Bohrloch eingeführten Hinterschnittankers gemäß der Figuren 1 bis 3a zu Beginn des Spreizvorgangs; und
- Figur 5: eine Schnittdarstellung gemäß Figur 4 nach dem Verspreizen des Hinterschnittankers.

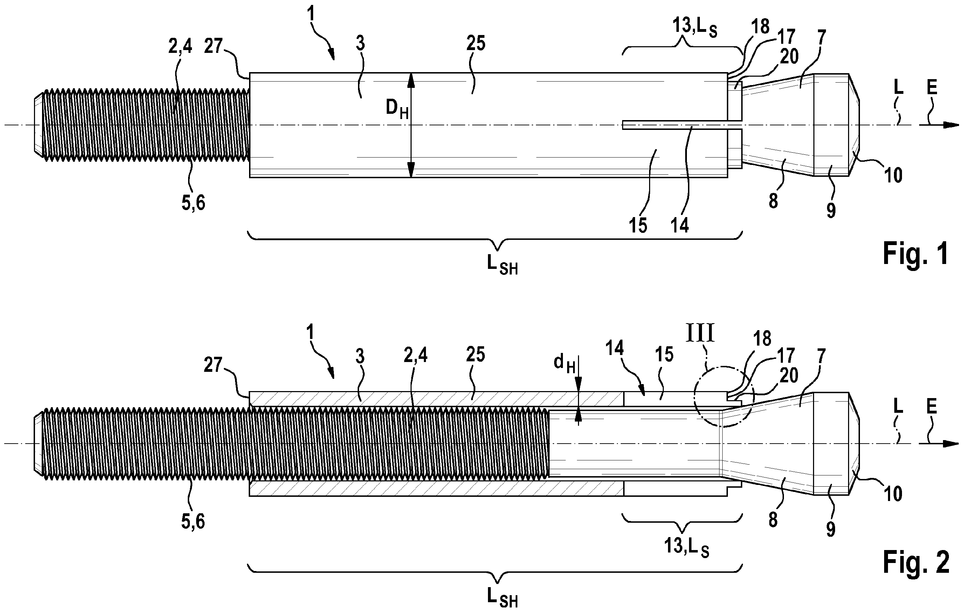

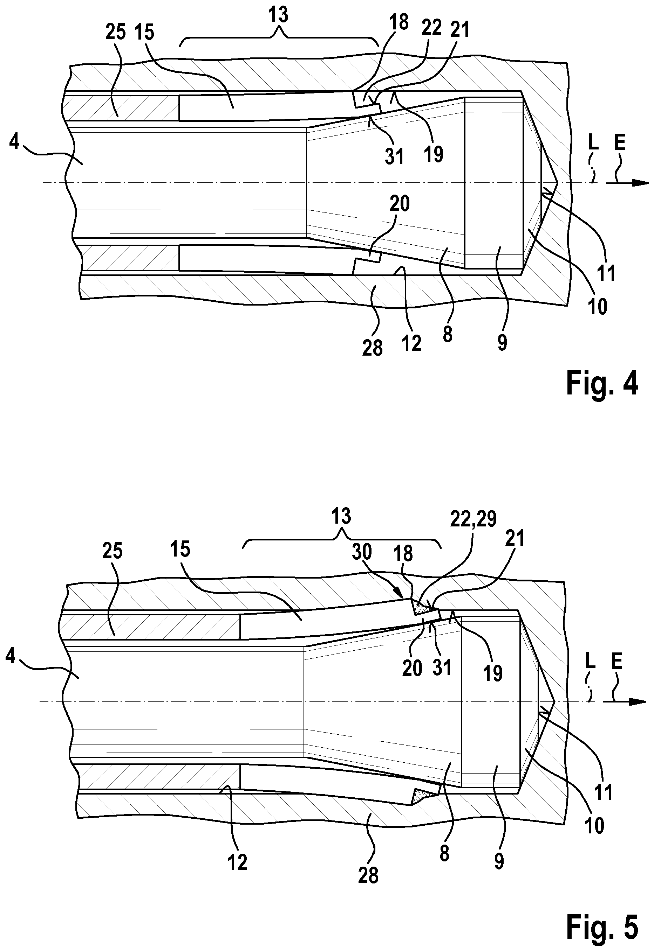

In den Figuren 1 bis 3a ist ein erster erfindungsgemäßer Hinterschnittanker 1 dargestellt, der einen Ankerbolzen 2 und eine Spreizhülse 3 aufweist. Der Ankerbolzen 2 ist aus Stahl hergestellt und umfasst einen lang gestreckten zylindrischer Grundkörper 4, der sich entlang einer Längsachse L erstreckt, die zentrisch im Grundkörper 4 verläuft und auch die Längsachse L des Hinterschnittankers 1 und der Spreizhülse 3 bildet. An dem in Einbringrichtung E hinteren Teil des Grundkörpers 4 ist ein Außengewinde 5 als Lastangriffsmittel 6 angeordnet, das sich von dem in Einbringrichtung E hinteren Ende des Ankerbolzens 2 über circa zwei Drittel der Länge des Ankerbolzens 2 erstreckt und an dem ein nicht dargestelltes Anbauteil mittels einer ebenfalls nicht dargestellten Mutter befestigt werden kann. In Einbringrichtung E vorne ist am Ankerbolzen 2 ein Spreizkörper 7 ausgebildet. Der Spreizkörper 7 weist eine kegelstumpfförmige konische Spreizfläche 8 auf, die sich in Einbringrichtung E im Durchmesser konisch erweitert. An die konische Spreizfläche 8 schließt sich in Einbringrichtung E ein zylindrischer Übergangsabschnitt 9 und daran ein Abstützabschnitt 10 an. Der Abstützabschnitt 10 ist kegelstumpfförmig, mit in Einbringrichtung E abnehmendem Durchmesser, wobei der Kegelwinkel so gewählt ist, dass er zu einer Kegelfläche 11 am Grund eines Bohrlochs 12 korrespondiert, wie dies in den Figuren 4 und 5 zu sehen ist.

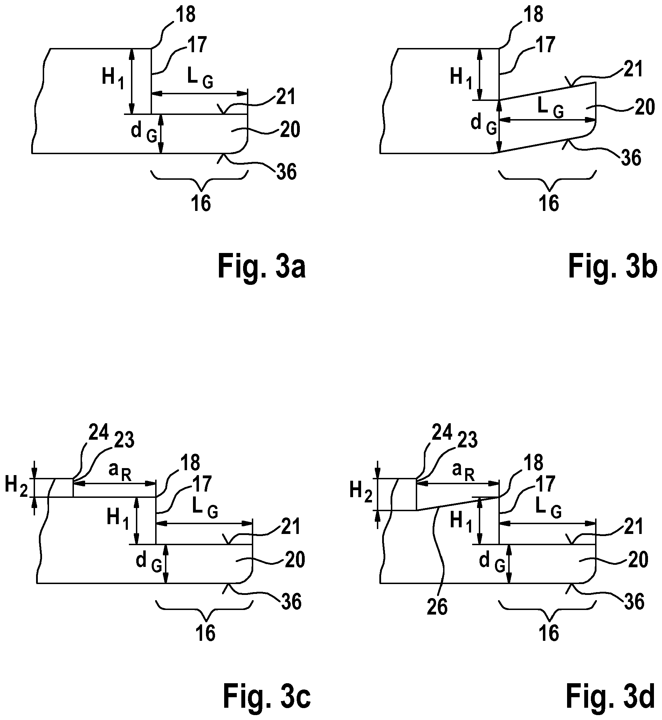

Die Spreizhülse 3 ist aus einem geschlossenen, hohlzylindrischen Rohr aus Stahl hergestellt, wobei der Innendurchmesser der Spreizhülse 3 geringfügig größer als der Durchmesser des Grundkörpers 4 und kleiner als der Durchmesser des Übergangabschnitts 9 ist. Die Spreizhülse 3 ist auf den Grundkörper 4 aufgeschoben und am Ankerbolzen 2 in Längsrichtung entlang der Längsachse L beweglich angeordnet. Die Spreizhülse 3 weist einbringseitig vorn einen Spreizabschnitt 13 auf, in dem Schlitze 14 mit der axialen Länge L_{S} die Spreizhülse 3 in Spreizelemente 15 unterteilen. Ansonsten ist die Spreizhülse 3 im Umfang geschlossen, also ungeschlitzt. Im dargestellten Ausführungsbeispiel sind im Spreizabschnitt 13 vier über den Umfang gleich verteilte Schlitze 14 angeordnet, die den rohrförmigen Querschnitt der Spreizhülse 3 in vier in Umfangsrichtung gewölbte Spreizelemente 15 unterteilen, die als Kragarme mit dem ungeschlitzten, hinteren Teil 25 der Spreizhülse 3 verbunden sind. Die Spreizelemente 15 können durch ein Aufschieben der Spreizhülse 3 auf die Spreizfläche 8 des Spreizkörpers 7 radial nach außen, weg von der Längsachse L und voneinander weg aufgespreizt werden, wodurch sich der maximale Durchmesser des Spreizabschnitts 13 gegenüber dem unverspreizten Zustand vergrößert, wie dies insbesondere in Figur 5 zu sehen ist. An der Spreizhülse 3 ist an ihrem vorderen Ende am Spreizabschnitt 13 ein Gleitabschnitt 16 ausgebildet, der gegenüber dem ungeschlitzten Teil der Spreizhülse 3 und den in Einbringrichtung E hinter dem Gleitabschnitt 16 angeordneten Teilen des Spreizabschnitts 13 im Durchmesser reduziert ist, also einen kleineren Durchmesser aufweist. Im Ausführungsbeispiel ist der einbringseitig vordere Teil eines jeden der Spreizelemente 15 als Gleitelement 20 ausgebildet, das den Bereich der Spreizhülse 3 mit dem - bezogen auf den unverspreizten Zustand, wie er in den Figuren 1 bis 3a dargestellt ist - geringsten Durchmesser bildet. Direkt angrenzend und in Einbringrichtung E hinter dem Gleitelement 20 ist eine erste Ringstufe 17 angeordnet, die eine erste Kante 18 zum Eingriff in eine Bohrlochwand 19 (vgl. Figuren 4 und 5) bildet und die in der Figur 3a als Detail der Figur 2 dargestellt ist.

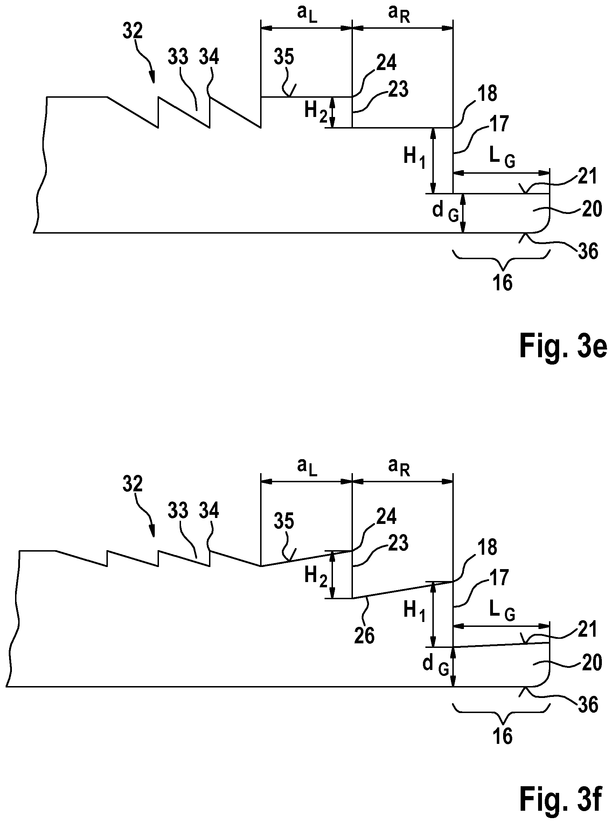

In Figur 3a ist der in Figur 1 als Detail III gekennzeichnete Bereich des unverspreizten Hinterschnittankers 1 vergrößert dargestellt. Das Gleitelement 20 des Gleitabschntts 16 weist eine Außenfläche 21 auf, die sich parallel zur Längsachse L erstreckt. Die axiale Länge L_{G} des Gleitelements 20 ist größer als, hier mehr als doppelt so groß wie die radiale Dicke d_{G} des Gleitelements 20 im unverspreizten Zustand, die hier der Materialdicke entspricht. Die axiale Länge L_{G} des Gleitelements 20 ist kleiner als 5 % der axialen Länge L_{SH} der Spreizhülse 3. und kleiner als 15 % der Länge L_{S} der Schlitze 14. Zudem ist die Dicke d_{G} des Gleitelements 20 kleiner als die radiale Höhe H₁, der ersten Ringstufe 17 im unverspreizten Zustand. Die Dicke d_{G} ist zudem kleiner als 40 % der maximalen Dicke d_{H}, welche die Wand der Spreizhülse 3 in ihrem ungeschlitzten hinteren Teil 25 aufweist. Die Spreizhülse 3 weist in diesem Fall im Bereich der erste Ringstufe 17 einen Durchmesser auf, der dem Durchmesser des hinteren Teils 25 der Spreizhülse 3 entspricht. In Figur 3b ist eine abweichende Ausführungsform dargestellt, bei der das Gleitelement 20, einschließlich seiner Innenfläche 36 und seiner Außenfläche 21, gegenüber der Längsachse L in Einbringrichtung E nach außen, also radial weg von der Längsachse L, geneigt ist. Bei der in Figur 3f dargestellten Variante ist nur die Außenfläche 21 geneigt, so dass die Dicke d_{G} des Gleitelements in Einbringrichtung zunimmt. Die in den Figuren 3c bis 3f dargestellten Ausführungsformen weisen gegenüber den Ausführungsformen der Figuren 3a und 3b jeweils eine zweite Ringstufe 23 mit einer zweiten Kante 24 zum Eingriff in eine Bohrlochwand 19 (vgl. Figuren 4 und 5) auf. Die zweite Ringstufe 23 ist zwischen der ersten Ringstufe 17 und dem ungeschlitzten, hinteren Teil 25 der Spreizhülse 3 angeordnet, die erste Ringstufe 17 grenzt direkt an das Gleitelement 20 an. Bei diesen Varianten weist die Spreizhülse 3 an der ersten Ringstufe 17 einen Durchmesser auf, der kleiner als der Durchmesser an der zweiten Ringstufe 23 ist, der dem Durchmesser des hinteren Teils 25 der Spreizhülse 3 entspricht. Dabei ist die radiale Höhe H₁, der ersten Ringstufe 17 größer als die radiale Höhe H₂ der zweiten Ringstufe 23. Zudem ist der Abstand a_{R} zwischen den beiden Ringstufen 17, 23 geringer als die Länge L_{G} des Gleitabschnitts 16, aber größer als die 1,5-fache Höhe H₁ der ersten Ringstufe 17, so dass die erste Ringstufe 17 massiv und stabil ausgebildet ist. Bei den in den Figuren 3d und 3f dargestellten Varianten ist der Zwischenbereich 26 zwischen den Ringstufen 17, 23 im unverspreizten Zustand konisch, gegen die Längsachse L geneigt, mit nach hinten, entgegen der Einbringrichtung E abnehmendem Durchmesser ausgebildet.

Bei den in den Figuren 3e und 3f dargestellten Varianten ist in Einbringrichtung (E) hinter der zweiten Ringstufe 23 ein Rauheitselement 32 ausgebildet, das in einem axialen Abstand a_{L} zu der benachbarten zweiten Ringstufe 23 an der Spreizhülse 3 im geschlitzten Spreizabschnitt 13 angeordnet ist. Das Rauheitselement 32 besteht aus mehreren, durch Nuten 33 gebildeten, keilförmigen Schneidezähnen 34, die entgegen der Einbringrichtung E ansteigen, und an ihrem hinteren Ende steil, orthogonal zu Längsachse L abfallen. Die Schneidezähne 34 sind umlaufend an der Spreizhülse 3 angeordnet und weisen einen Durchmesser auf, der dem Durchmesser D_{H} der Spreizhülse 3 im hinteren ungeschlitzten Teil 25 der Spreizhülse 3 entspricht. Der Abstand a_{L} ist größer als die 1,5-fache Höhe H₂ der zweiten Ringstufe 23, so dass auch diese Ringstufe 23 massiv und stabil ausgebildet ist und auch die zweite Kante 24 als Meiselkante wirken kann. Bei der in der Figur 3e dargestellten Variante ist die Abstandsfläche 35 zwischen dem Rauheitselement 32 und der zweiten Kante 24 eben und verläuft parallel zur Längsachse L. Dagegen ist die Abstandsfläche 35 bei der in Figur 3f dargestellten Variante in Einbringrichtung E radial nach außen geneigt, was ein besseres Eindringen der zweiten Kante 24 und der Schneidezähne 34 in eine Bohrlochwand ermöglicht.

Zum Verankern wird der Hinterschnittanker 1 in ein Bohrloch 12 eingeführt, bis der Abstützabschnitt 10 des Spreizkörpers 7 an der Kegelfläche 11 am Grund des Bohrloches 12 anliegt. Dann wird die Spreizhülse 3 des Hinterschnittankers 1 im Bohrloch 12 verspreizt. Zum Verspreizen der Spreizhülse 3 im Bohrloch 12 wird auf das in Einbringrichtung E hintere Ende 27 der Spreizhülse 3 ein Setzwerkzeug (nicht dargestellt) aufgesetzt, derart, dass die Spreizhülse 3 durch Schläge auf ihr in Einbringrichtung E hinteres Ende 27 auf die konische Spreizfläche 8 des Spreizkörpers 7 aufgeschoben wird. In Figur 4 ist der Spreizabschnitt 13 der Spreizhülse 3 des in den Figuren 1 bis 3a dargestellten Hinterschnittankers 1 dargestellt, die nach wenigen Schlägen soweit aufgespreizt ist, dass die erste Kante 18 an der Bohrlochwand 19 anliegt. Das Gleitelement 20 des Gleitabschnitts 16 liegt an der konischen Spreizfläche 8 flächig an und bildet eine Kontaktfläche 31 des Spreizelements 15 zum Spreizkörper 7, auf der das Spreizelement 15 auf der Spreizfläche 7 gleitet. Durch weiteres Schlagen wird die Spreizhülse 3 weiter in Einbringrichtung E in das Bohrloch 12 eingeschoben und das Spreizelement 15 radial nach außen von der Längsachse L weg gedrückt. Hierdurch schneidet die erste Kante 18 wie ein Meisel in die Bohrlochwand 12 ein und wird wie ein Meisel entlang der Bohrlochwand 12 in Einbringrichtung E und senkrecht dazu gegen die Bohrlochwand 19 gepresst, wodurch Material 29 des Verankerungsgrunds 28 abgetragen und ein Hinterschnitt 30 erstellt wird, in den das in Einbringrichtung E hinter der ersten Kante 18 liegende Teil des Spreizelements 15 flächig eingreift. Das abgetragene Material 29 des Verankerungsgrunds 28 wird von einem Aufnahmeraum 22 zumindest teilweise aufgenommen, der von der Außenfläche 21 des Gleitelements 20 und der ersten Ringstufe 17 begrenzt ist. Dabei verhindert das Gleitelement 20, dass das abgetragene Material 29 zwischen die Spreizfläche 8 und die Spreizhülse 3, insbesondere im Bereich der Kontaktfläche 31 gelangt, was aufgrund einer erhöhten Reibung zwischen der Spreizfläche 8 und der Spreizhülse 3 zu einer spürbaren Erhöhung der zum Verspreizen notwendigen Schlagenergie führen würde. Aufgrund der erfindungsgemäßen Ausgestaltung weist der Hinterschnittanker 1 ein im Vergleich zu den bisher bekannten Hinterschnittankern verbessertes Aufspreizverhalten auf.

Durch Zug am Lastangriffsmittel 6 kann der Spreizkörper 7 anschließend zusätzlich in die Spreizhülse 3 eingezogen werden.

### Bezugszeichenliste

### Selbstschneidender Hinterschnittanker und Spreizhülse

- 1: Hinterschnittanker
- 2: Ankerbolzen
- 3: Spreizhülse
- 4: Grundkörper des Ankerbolzens 2
- 5: Außengewinde
- 6: Lastangriffsmittel
- 7: Spreizkörper
- 8: konische Spreizfläche
- 9: Übergangsabschnitt
- 10: Abstützabschnitt
- 11: Kegelfläche
- 12: Bohrloch
- 13: Spreizabschnitt
- 14: Schlitz
- 15: Spreizelement
- 16: Gleitabschnitt
- 17: erste Ringstufe
- 18: erste Kante
- 19: Bohrlochwand
- 20: Gleitelement
- 21: Außenfläche des Gleitelements 20
- 22: Aufnahmeraum
- 23: zweite Ringstufe
- 24: zweite Kante
- 25: hinterer Teil der Spreizhülse 3
- 26: Zwischenbereich
- 27: hinteres Ende der Spreizhülse 3
- 28: Verankerungsgrund
- 29: abgetragenes Material
- 30: Hinterschnitt
- 31: Kontaktfläche
- 32: Rauheitselement
- 33: Nut
- 34: Schneidezahn
- 35: Abstandsfläche
- 36: Innenfläche des Gleitelements 20
- a_{L}: Abstand zwischen der zweiten Ringstufe 23 und dem Rauheitselement 32
- a_{R}: Abstand zwischen den beiden Ringstufen 17, 23
- d_{G}: radiale Dicke des Gleitelements 20
- d_{H}: radiale Dicke der Wand der Spreizhülse 3 im hinteren Teil 25
- D_{H}: Durchmesser der Spreizhülse 3 im hinteren Teil 25
- E: Einbringrichtung
- H₁: radiale Höhe der ersten Ringstufe 17
- H₂: radiale Höhe der zweiten Ringstufe 23
- L: Längsachse
- L_{G}: axiale Länge des Gleitabschnitts 16
- L_{S}: axiale Länge der Schlitze 14
- L_{SH}: Länge der Spreizhülse 3

## Patentansprüche

1. Selbstschneidender Hinterschnittanker (1) mit einem Ankerbolzen (2) und einer Spreizhülse (3), wobei der Hinterschnittanker (1) durch Verspreizen der Spreizhülse (3) in einem Bohrloch (12) verankerbar ist,
wobei der Ankerbolzen (2) an einem in Einbringrichtung (E) hinteren Teil ein Lastangriffsmittel (6) und einbringseitig einen Spreizkörper (7) aufweist, der sich in Einbringrichtung (E) im Durchmesser erweitert,
wobei die Spreizhülse (3) rohrförmig ausgebildet und am Ankerbolzen (2) in Längsrichtung beweglich angeordnet ist, wobei die Spreizhülse (3) einbringseitig angeordnete und durch Schlitze (14) unterteilte Spreizelemente (15) aufweist, die mittels des Spreizkörpers (7) radial voneinander weg aufspreizbar sind,
wobei der Hinterschnittanker (1) derart gestaltet ist, dass zum Verspreizen ein Setzwerkzeug an das in Einbringrichtung (E) hintere Ende (27) der Spreizhülse (3) aufsetzbar und die Spreizhülse (3) durch Schläge auf ihr in Einbringrichtung (E) hinteres Ende (27) auf den Spreizkörper (7) aufschiebbar ist,
**dadurch gekennzeichnet,**
**dass** die Spreizhülse (3) an ihrem in Einbringrichtung (E) vorderen Ende einen im Durchmesser reduzierten Gleitabschnitt (16) mit mindestens einem Gleitelement (20) aufweist und zwischen dem Gleitabschnitt (16) und einem hinteren Teil (25) der Spreizhülse (3) mindestens eine erste Ringstufe (17) angeordnet ist, die eine erste Kante (18) zum Eingriff in eine Bohrlochwand (19) des Bohrlochs (12) bildet.

2. Hinterschnittanker nach Anspruch 1, **dadurch gekennzeichnet, dass** das Gleitelement (20) eine axiale Länge (L_{G}) aufweist, die größer als seine radiale Dicke (d_{G}) ist.

3. Hinterschnittanker nach Anspruch 1 oder 2, **dadurch gekennzeichnet, dass** das Gleitelement (20) eine axiale Länge (L_{G}) aufweist, die kleiner als 10 % der axialen Länge (L_{SH}) der Spreizhülse (3) ist.

4. Hinterschnittanker nach einem der Ansprüche 1 bis 3, **dadurch gekennzeichnet, dass** die radiale Dicke (d_{G}) des Gleitelements (20) nicht größer als die radiale Höhe (H₁) der ersten Ringstufe (17) ist.

5. Hinterschnittanker nach einem der Ansprüche 1 bis 4, **dadurch gekennzeichnet, dass** das Gleitelement (20) eine Außenfläche (21) aufweist, die in Einbringrichtung (E) radial nach außen geneigt ist.

6. Hinterschnittanker nach einem der Ansprüche 1 bis 5, **dadurch gekennzeichnet, dass** zwischen dem Gleitabschnitt (16) und dem hinteren Teil (25) der Spreizhülse (3) mindestens zwei Ringstufen (17, 23) angeordnet sind, die sich im Außendurchmesser unterscheiden und Kanten (18, 24) zum Eingriff in die Bohrlochwand (19) bilden.

7. Hinterschnittanker nach Anspruch 6, **dadurch gekennzeichnet, dass** die erste Ringstufe (17), die sich entgegen der Einbringrichtung (E) an den Gleitabschnitt (16) anschließt, einen Durchmesser aufweist, der kleiner als der Durchmesser des hinteren Teils (25) der Spreizhülse (3) ist.

8. Hinterschnittanker nach Anspruch 6 oder 7, **dadurch gekennzeichnet, dass** die erste Ringstufe (17) eine größere radiale Höhe (H₁) aufweist als die zweite Ringstufe (23), die zwischen der ersten Ringstufe (17) und dem hinteren Teil (25) der Spreizhülse (3) angeordnet ist.

9. Hinterschnittanker nach einem der Ansprüche 6 bis 8, **dadurch gekennzeichnet, dass** die zweite Ringstufe (23) einen Durchmesser aufweist, der dem Durchmesser des hinteren Teils (25) der Spreizhülse (3) entspricht.

10. Hinterschnittanker nach einem der Ansprüche 6 bis 9, **dadurch gekennzeichnet, dass** der Abstand (a_{R}) zwischen den beiden Ringstufen (17, 23) geringer als die axiale Länge (L_{G}) des Gleitabschnitts (16) ist.

11. Hinterschnittanker nach einem der Ansprüche 6 bis 10, **dadurch gekennzeichnet, dass** der Abstand (a_{R}) zwischen den beiden Ringstufen (17, 23) größer als die radiale Höhe (H₁) der ersten Ringstufe (17) ist.

12. Hinterschnittanker nach einem der Ansprüche 6 bis 11, **dadurch gekennzeichnet, dass** ein Zwischenbereich (26) zwischen den beiden Ringstufen (17, 23) konisch, mit entgegen der Einbringrichtung (E) abnehmendem Durchmesser, ausgebildet ist.

13. Hinterschnittanker nach einem der Ansprüche 1 bis 12, **dadurch gekennzeichnet, dass** in Einbringrichtung (E) hinter der ersten und/oder der zweiten Ringstufe (17, 23) ein Rauheitselement (32) mit axialem Abstand (a_{L}) zu der benachbarten Ringstufe (23) angeordnet ist.

14. Hinterschnittanker nach Anspruch 13, **dadurch gekennzeichnet, dass** der Abstand (a_{L}) größer als die radiale Höhe (H₂) der benachbarten Ringstufe (23) ist.

15. Hinterschnittanker nach Anspruch 13 oder 14, **dadurch gekennzeichnet, dass** zwischen dem Rauheitselement (32) und der benachbarten Ringstufe (23) eine Abstandsfläche (35) angeordnet ist, die in Einbringrichtung (E) radial nach außen geneigt ist.

## Claims

1. Self-cutting undercut anchor (1) having an anchor bolt (2) and an expansion sleeve (3), the undercut anchor (1) being anchorable in a drilled hole (12) by expansion of the expansion sleeve (3),
wherein the anchor bolt (2) has a load-application means (6) on a part that is to the rear in the introduction direction (E) and has at the introduction end an expander body (7) which increases in diameter in the introduction direction (E), wherein the expansion sleeve (3) is of tubular construction and is arranged on the anchor bolt (2) so as to be movable in the longitudinal direction, the expansion sleeve (3) having expansion elements (15) which are arranged at the introduction end and are divided by slots (14), which expansion elements are expansible radially away from one another by means of the expander body (7),
wherein the undercut anchor (1) is configured in such a way that, for expansion, a setting tool can be applied to that end (27) of the expansion sleeve (3) which is to the rear in the introduction direction (E) and the expansion sleeve (3) can be pushed onto the expander body (7) by blows to its end (27) that is to the rear in the introduction direction (E),
**characterised in that**
the expansion sleeve (3) has, at its forward end in the introduction direction (E), a slide portion (16) of reduced diameter having at least one slide element (20), and between the slide portion (16) and a rear portion (25) of the expansion sleeve (3) there is arranged at least one first annular step (17) which forms a first edge (18) for engagement in a wall (19) of the drilled hole (12).

2. Undercut anchor according to claim 1, **characterised in that** the slide element (20) has an axial length (L_{G}) that is greater than its radial thickness (d_{G}).

3. Undercut anchor according to claim 1 or 2, **characterised in that** the slide element (20) has an axial length (L_{G}) that is less than 10 % of the axial length (L_{SH}) of the expansion sleeve (3).

4. Undercut anchor according to any one of claims 1 to 3, **characterised in that** the radial thickness (d_{G}) of the slide element (20) is not greater than the radial height (H₁) of the first annular step (17).

5. Undercut anchor according to any one of claims 1 to 4, **characterised in that** the slide element (20) has an outer surface (21) which is inclined radially outwards in the introduction direction (E).

6. Undercut anchor according to any one of claims 1 to 5, **characterised in that** between the slide portion (16) and the rear part (25) of the expansion sleeve (3) there are arranged at least two annular steps (17, 23) which differ in external diameter and form edges (18, 24) for engagement in the wall (19) of the drilled hole.

7. Undercut anchor according to claim 6, **characterised in that** the first annular step (17), which adjoins the slide portion (16) in the opposite direction to the introduction direction (E), has a diameter that is smaller than the diameter of the rear part (25) of the expansion sleeve (3).

8. Undercut anchor according to claim 6 or 7, **characterised in that** the first annular step (17) has a greater radial height (H₁) than the second annular step (23) which is arranged between the first annular step (17) and the rear part (25) of the expansion sleeve (3).

9. Undercut anchor according to any one of claims 6 to 8, **characterised in that** the second annular step (23) has a diameter that corresponds to the diameter of the rear part (25) of the expansion sleeve (3).

10. Undercut anchor according to any one of claims 6 to 9, **characterised in that** the spacing (a_{R}) between the two annular steps (17, 23) is smaller than the axial length (L_{G}) of the slide portion (16).

11. Undercut anchor according to any one of claims 6 to 10, **characterised in that** the spacing (a_{R}) between the two annular steps (17, 23) is greater than the radial height (H₁) of the first annular step (17).

12. Undercut anchor according to any one of claims 6 to 11, **characterised in that** an intermediate region (26) between the two annular steps (17, 23) is conical, with its diameter decreasing in the opposite direction to the introduction direction (E).

13. Undercut anchor according to any one of claims 1 to 12, **characterised in that** to the rear of the first and/or the second annular step (17, 23) in the introduction direction (E) there is arranged a roughness element (32) having an axial spacing (a_{L}) from the adjacent annular step (23).

14. Undercut anchor according to claim 13, **characterised in that** the spacing (a_{L}) is greater than the radial height (H₂) of the adjacent annular step (23).

15. Undercut anchor according to claim 13 or 14, **characterised in that** between the roughness element (32) and the adjacent annular step (23) there is arranged a spacing surface (35) which is inclined radially outwards in the introduction direction (E).

## Revendications

1. Pièce d'ancrage contre-dépouillée (1) à effet d'autotaraudage, comprenant un tirant d'ancrage (2) et une cheville expansible (3), ladite pièce d'ancrage contre-dépouillée (1) pouvant être ancrée dans un trou foré (12) par expansion de ladite cheville expansible (3),
ledit tirant d'ancrage (2) comportant un moyen (6) d'application d'une charge dans une partie située à l'arrière dans une direction d'insertion (E) et, côté insertion, un corps d'écartement (7) dont le diamètre croît dans ladite direction d'insertion (E),
la cheville expansible (3) étant de réalisation tubulaire et étant implantée sur le tirant d'ancrage (2) avec faculté de mouvement dans la direction longitudinale, ladite cheville expansible (3) étant pourvue d'éléments expansibles (15) situés côté insertion, scindés par des fentes (14) et pouvant être déployés au moyen du corps d'écartement (7), avec éloignement les uns des autres dans le sens radial,
ladite pièce d'ancrage contre-dépouillée (1) étant structurellement agencée de façon telle qu'un outil d'installation puisse être engagé sur l'extrémité (27) de la cheville expansible (3) située à l'arrière dans la direction d'insertion (E), en vue du déploiement, et que ladite cheville expansible (3) puisse être enfilée sur le corps d'écartement (7) par des coups portés sur son extrémité (27) située à l'arrière dans ladite direction d'insertion (E), **caractérisée par le fait**
**que** la cheville expansible (3) est munie, à son extrémité située à l'avant dans la direction d'insertion (E), d'une zone de glissement (16) qui présente un diamètre réduit et comporte au moins un élément de glissement (20), sachant qu'au moins un premier épaulement annulaire (17), interposé entre ladite zone de glissement (16) et une partie postérieure (25) de ladite cheville expansible (3), forme une première arête (18) conçue pour venir mordre dans une paroi (19) du trou foré (12).

2. Pièce d'ancrage contre-dépouillée selon la revendication 1, **caractérisée par le fait que** l'élément de glissement (20) présente une longueur axiale (L_{G}) supérieure à son épaisseur radiale (d_{G}).

3. Pièce d'ancrage contre-dépouillée selon la revendication 1 ou 2, **caractérisée par le fait que** l'élément de glissement (20) présente une longueur axiale (L_{G}) inférieure à 10 % de la longueur axiale (L_{SH}) de la douille expansible (3).

4. Pièce d'ancrage contre-dépouillée selon l'une des revendications 1 à 3, **caractérisée par le fait que** l'épaisseur radiale (d_{G}) de l'élément de glissement (20) n'est pas supérieure à la hauteur radiale (H₁) du premier épaulement annulaire (17).

5. Pièce d'ancrage contre-dépouülée selon l'une des revendications 1 à 4, **caractérisée par le fait que** l'élément de glissement (20) offre une surface extérieure (21) inclinée radialement vers l'extérieur dans la direction d'insertion (E).

6. Pièce d'ancrage contre-dépouillée selon l'une des revendications 1 à 5, **caractérisée par le fait qu'**au moins deux épaulements annulaires (17, 23), interposés entre la zone de glissement (16) et la partie postérieure (25) de la cheville expansible (3), présentent des diamètres extérieurs différents et forment des arêtes (18, 24) conçues pour venir mordre dans la paroi (19) du trou foré.

7. Pièce d'ancrage contre-dépouillée selon la revendication 6, **caractérisée par le fait que** le premier épaulement annulaire (17), se rattachant à la zone de glissement (16) en sens inverse de la direction d'insertion (E), présente un diamètre inférieur au diamètre de la partie postérieure (25) de la cheville expansible (3).

8. Pièce d'ancrage contre-dépouillée selon la revendication 6 ou 7, **caractérisée par le fait que** le premier épaulement annulaire (17) présente une hauteur radiale (H₁) supérieure à celle du second épaulement annulaire (23) interposé entre ledit premier épaulement annulaire (17) et la partie postérieure (25) de la cheville expansible (3).

9. Pièce d'ancrage contre-dépouillée selon l'une des revendications 6 à 8, **caractérisée par le fait que** le second épaulement annulaire (23) présente un diamètre correspondant au diamètre de la partie postérieure (25) de la cheville expansible (3).

10. Pièce d'ancrage contre-dépouillée selon l'une des revendications 6 à 9, **caractérisée par le fait que** la distance (a_{R}), comprise entre les deux épaulements annulaires (17, 23), est inférieure à la longueur axiale (L_{G}) de la zone de glissement (16).

11. Pièce d'ancrage contre- dépouillée selon l'une des revendications 6 à 10, **caractérisée par le fait que** la distance (a_{R}), comprise entre les deux épaulements annulaires (17, 23), est supérieure à la hauteur radiale (H₁) du premier épaulement annulaire (17).

12. Pièce d'ancrage contre-dépouillée selon l'une des revendications 6 à 11, **caractérisée par le fait qu'**une région intermédiaire (26), située entre les deux épaulements annulaires (17, 23), est de réalisation tronconique avec diamètre décroissant en sens inverse de la direction d'insertion (E).

13. Pièce d'ancrage contre-dépouillée selon l'une des revendications 1 à 12, **caractérisée par le fait qu'**un élément (32), doué de rugosité, est disposé derrière le premier et/ou le second épaulement(s) annulaire(s) (17, 23) dans la direction d'insertion (E), à distance axiale (a_{L}) de l'épaulement annulaire (23) voisin.

14. Pièce d'ancrage contre-dépouillée selon la revendication 13, **caractérisée par le fait que** la distance (a_{L}) est supérieure à la hauteur radiale (H₂) de l'épaulement annulaire (23) voisin.

15. Pièce d'ancrage contre-dépouillée selon la revendication 13 ou 14, **caractérisée par le fait qu'**une surface d'espacement (35), interposée entre l'élément (32) doué de rugosité et l'épaulement annulaire (23) voisin, est inclinée radialement vers l'extérieur dans la direction d'insertion (E).
